# EUROPEAN PATENT SPECIFICATION

(11) **EP 1 603 437 B1**
(45) Date of publication and mention of the grant of the patent: **26.09.2012**
(21) Application number: 04798787.0
(22) Date of filing: 08.11.2004
(51) Int. Cl.: A47J 27/04

(54) **EQUIPMENT FOR THE ASEPTIC PREPARATION OF FOOD PRODUCTS**
AUSRÜSTUNG FÜR DIE KEIMFREIE ZUBEREITUNG VON NAHRUNGSMITTELPRODUKTEN
APPAREIL DESTINE A LA PREPARATION ASEPTIQUE DE PRODUITS ALIMENTAIRES

(30) Priority: 13.11.2003 IT BO20030674
(43) Date of publication of application: 14.12.2005
(73) Proprietor: Malavasi, Giuseppe, 40010 San Marino di Bentivoglio (BO) (IT)
(72) Inventor: Malavasi, Giuseppe, 40010 San Marino di Bentivoglio (BO) (IT)
(74) Representative: Provvisionato, Paolo
(86) International application number: PCT/IB2004/003634
(87) International publication number: WO 2005/046406

## Description

### Field of the Art

The invention concerns the engineering technique of the equipment for the preparation of food products. International classification reference A 47J

### State of the Art

There are many different well known types of equipment within this art for the processing of food products. None of this equipment allows for the possibility to programme production of the entire range of food products demanded by the market from ice-cream manufacture to vacuum cooking and fast steam cooking. The matter is to create a piece of equipment that allows the programming and implementation of a large number of food processes using the same machinery purposely equipped in order to optimise most technological food processes.

The document US 4,844,933 relates to a process and apparatus for sterilizing raw vegetable products. Therein, two cylindrical vessels are provided, each of which is substantially surrounded with an outer shell or jacket. One vessel is a sterilizer vessel, while the other vessel is a cooling vessel. Inside the vessels paddles for agitating and mixing contents are provided for. Each vessel is preferably made of stainless steel and constructed to withstand high pressurization. The vessels are connected to a vacuum system. The jacket of the one vessel is connected to a steam source and boiler, and the jacket of the other vessel is connected to a cooling fluid source. In order to exchange the contents between the two vessels, suitable conduits are provided for.

The document EP 0 755 629 A1 relates to a method for manufacturing food preparations and particularly fruit preparations. Therein, a receptacle is provided for which is surrounded by a cooling and heating jacket. The cooling and heating jacket is coupled to conduits for introducing a heating fluid or a cooling fluid into the jacket. Further, a vacuum system is connected to the receptacle. The receptacle can be connected to a separate cooking unit.

The document US 5,284,085 entitled "Apparatus for the Heat Treatment of Particulate Maternal such as Food" relates to food treatment. Accordingly, food is treated by means of steam. A vessel is provided for generally having the shape of a horizontal cylinder. Further, means for heating the material comprising an agitating device arranged in the vessel are provided for. The agitating device is connected to a steam source and arranged to perform an oscillating movement around a horizontal axis. The agitating device has a great number of holes, through which steam may flow out and heat the material. Furthermore, means to cool the material are provided for. The cooling means are provided for between an additional outer casing and an outside of the vessel. Thereby, a sterilisation is achieved.

### Description

The invention will now be explained with reference to the accompanying figures which serve a solely illustrative purpose and in no way define the limits of the invention itself. The invention is defined by the appended claims.

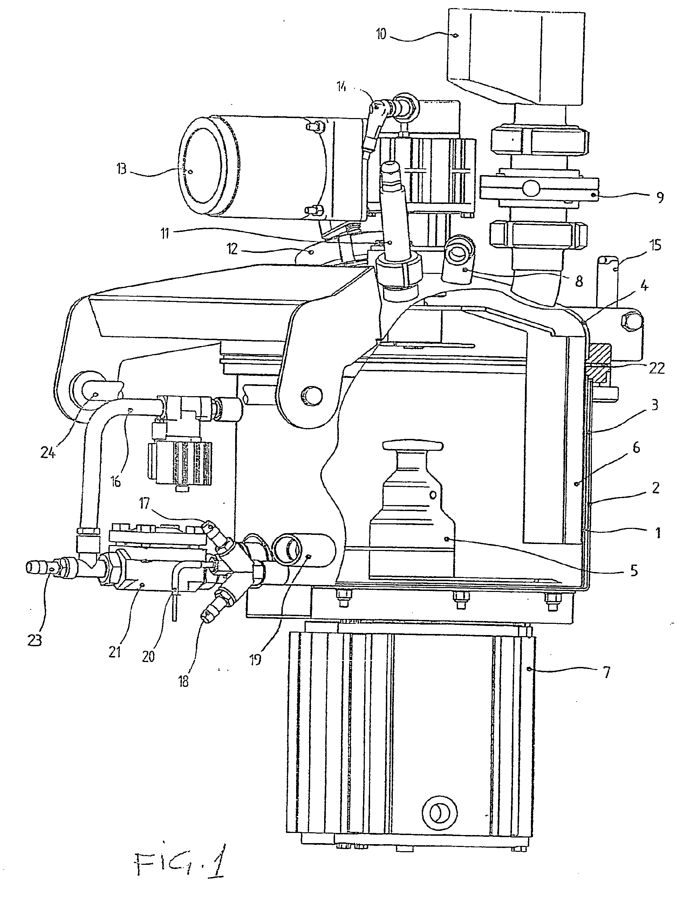

Figure 1 shows a partial cross-section representation of this equipment produced according to this invention.

In the figure, each individual feature is labelled as follows:
1 indicates the processing chamber suitably insulated with the relative interspace.
2 indicates the interspace for the circulation of fluids for cooling and heating the chamber.
3 indicates an interstice between the chamber and the interspace.
4 indicates the dome-shaped hemispheric lid.
5 indicates the main removable interchangeable implement.
6 indicates a scraping spatula as a secondary implement.
7 indicates the main implement motor.
8 indicates the joint for the connection to the vacuum system; for the connection to the washing fluid supply; for the connection to the overpressure downflow and for connection to expansion gases.
9 indicates a removable butterfly valve.
10 indicates a feeder for the introduction of ingredients.
11 indicates a device to light the inside of the chamber.
12 indicates an observation window with screenwiper for inspecting and checking the processing in progress.
13 indicates gearmotor to drive the secondary implement.
14 indicates a sensor for the correct selection of the resting position for the secondary implement.
15 indicates the clamp for locking the lid.
16 indicates the channel for the downflow of cooling fluid which circulates within the interspace.
17 indicates the inlet of the cooling fluid into the interspace.
18 indicates the inlet of the heating fluid into the interspace.
19 indicates the inlet valve for the processing fluids (sterilised compressed air; liquid gases for alimentary use; water and steam).
20 indicates a probe for measuring the temperature of the product being processed.
21 indicates the automatic condensation discharger in the interspace.
22 indicates the rubber sealing ring around the lid to ensure maintenance of the internal pressure and vacuum.
23 indicates the connection for the downflow of condensation and circulating water.
24 indicates the hinge for opening and closing the lid.

With the use of the technological components represented schematically in the figures a variety of food processing programmes can be carried out.
The first example refers to a quick cooking process by means of vacuum pressure steam :
Introduction of a small amount of water which will become steam.

Introduction of the suspension basket containing the product to be treated, which does not touch the water.

Elimination of any air present within the hermetically sealed processing chamber.

Heating of the interspace to transform the water into steam and increase the pressure inside the chamber or for the direct inlet of superheated steam into the hermetically sealed chamber.

Reset to atmospheric pressure inside the chamber by means of air or inert gas introduced into the chamber and subsequent rapid cooling before removing the product from the chamber. The quick cooking process obtained in a hermetic vacuum environment is achieved through the combination of vacuum pressure steam and rapid temperature drop, even below zero, before opening the processing chamber to remove the treated product.

Using the same equipment it is also possible to carry out complete pasteurisation programmes and stirring/mixing programmes at sub-zero temperatures by means of cooling liquid gas.

The second example refers to the process illustrated below.
Attachment of the appropriate implement in order to perform the mechanical shaking, cutting, crushing and homogenising of the product in the chamber.

Exhaust of the air from the chamber by means of a vacuum system. Carrying out the cooking process of the product at a pre-set temperature and the simultaneous mechanical operations by means of the appropriate implement.

Cooling via the circulation of cold water in the interspace combined with the vacuum system of the rapid cooling of the product. Stopping the circulation of cold water within the interspace and inlet of cooling liquid gas within the work environment and directly into the food product keeping the main implement in operation and the simultaneous opening of a valve for the expansion gas downflow via a channel connected to the water drainage system.

The third example refers to the possibility to amalgamate ice-cream through deep-freezing rather than freezing with the formation of microcrystals instead of macrocrystals.

All of the sterilisation and pasteurisation processes achievable using the equipment of the present invention will be perfectly aseptic because the product does not come into contact with the external atmosphere. Moreover the product, when taken out of the processing chamber is completely sterilised and remains in deactivated bacteriostatic conditions within a temperature range from minus 15 degrees centigrade to plus 4 degrees centigrade. The equipment herewith described may be suitable for use both in the catering industry and in small-scale food processing centres.

It should be highlighted that the present equipment is also suitable for the cryogenic production of ice-cream with a rapid chilling process by means of a cooling liquid gas admitted directly into the mass of the product to be treated inside the rotating or fixed processing chamber.

It is possible to obtain vacuum and subsequently pasteurise or sterilise the product also carrying out product vacuum concentrations, always keeping the product isolated from the external environment. Moreover it is possible to carry out pre-chilling by means of cold water circulation within the interspace and at the same time mix/stir the product and vacuum suck the internal heat. Having reached a thermal equilibrium between the interspace and the product contained in the processing chamber, the cryogenic fluid is directly injected into the product mass via a suitably sized valve and simultaneously an orifice is opened which allows for the emission of the expansion gas. The cryogenic fluid valve is opened automatically by the overpressure of the expanding gas and closes again automatically when the pressure drops to below the external atmospheric pressure in order to prevent the product entering the valve. It is evident that the unidirectional downflow of expanding gas avoids the inlet of polluting air or other agents into the processing chamber which remains constantly pressurised with the inlet of gas. It is particularly important to highlight that the main feature of this invention lies in the universal application of this equipment, which may satisfy a vast range of specific needs, if suitably equipped.

It clearly appears that the heuristic validity of this patent right consists of constructing just a single piece of equipment with multifunctional attachments which allows for the programmed management of food processing procedures able to satisfy the most wide ranging needs of a rapidly changing market.

The equipment may also be constructed in different sizes to suit the industrial needs of a high productivity level.

The invention naturally lends itself to different embodiments as regards both the dimensions and structural proportions of the various parts making up the equipment and the choice of materials to be used for their construction.

Now that the original innovative characteristics of the present invention have been made apparent, anyone with average skill in the art may construct equipment capable of carrying out technological food processes having the basic characteristics as described and illustrated in the following claims.

## Claims

1. Food preparation equipment for carrying out a variety of different food processing programs, comprising:
a single processing chamber (1) for carrying out said variety of different food processing programs;
an interspace (2) relatively insulating the single processing chamber (1) and being selectively heatable and coolable via a cooling fluid;
an interchangeable first implement (5) which can be coupled to a main motor (7);
a vacuum system; and
an inlet valve (19) for a processing fluid, connected to the processing chamber (1) for introducing a processing fluid directly into the food product.

2. Food preparation equipment of claim 1, further comprising an inlet (17) for a cooling fluid, the inlet (17) for a cooling fluid being connected to the interspace (2).

3. Food preparation equipment of claim 1 or 2, further comprising an inlet (18) for a heating fluid, the inlet (18) for a heating fluid being connected to the interspace (2).

4. Food preparation equipment of one of claims 1 to 3, wherein the interspace (2) surrounds the processing chamber (1).

5. Food preparation equipment of one of claims 1 to 4, further comprising an interstice (3) between the processing chamber (1) and the interspace (2).

6. Food preparation equipment of one of claims 1 to 5, further comprising a dome-shaped hemispheric lid.

7. Food preparation equipment of one of claims 1 to 6, further comprising a second implement (6) which can be coupled to a gearmotor (13).

8. Food preparation equipment of one of claims 1 to 7, further comprising a feeder (10) for introducing ingredients into the processing chamber (1).

9. Food preparation equipment of one of claims 1 to 8, further comprising a probe (20) for measuring temperature of a product to be processed.

10. Food preparation equipment of one of claims 1 to 9, further comprising an automatic condensation discharger (21) in the interspace (2).

11. Food preparation equipment of one of claims 1 to 10, further comprising a channel (16) for downflow of cooling fluid circulating in the interspace (2).

12. Food preparation equipment of one of claims 1 to 11, further comprising a connection (23) for downflow of condensation water and circulating water.

13. Food preparation equipment of claim 6, wherein the lid (4) is coupled to a hinge (24) for opening and closing the lid (4); is provided with a rubber sealing ring (22) to ensure maintenance of internal pressure and vacuum; and has a clamp (15) for locking the lid (4).

14. Food preparation equipment of one of claims 1 to 13, further comprising a light device (11) and an observation window (12), which preferably has a screenwiper, for inspecting and checking a processed product.

15. Food preparation equipment of claim 7, wherein the second implement (6) is a scraping spatula (6).

16. Food preparation equipment of one of claims 1 to 15, wherein the single processing chamber has a flat bottom onto which the interchangeable first implement (5) is placed.

17. Food preparation equipment of claim 16, wherein the single processing chamber (1) has a cylindrical lateral wall, the interchangeable first implement (5) having one appendix running adjacent to the flat bottom of the single processing chamber (1) and with a tip close to the cylindrical lateral wall thereof.

## Patentansprüche

1. Nahrungsmittelzubereitungsvorrichtung zum Ausführen von einer Vielzahl von verschiedenen Nahrungsmittelverarbeitungsprogrammen mit:
einer einzelnen Verarbeitungskammer (1) zum Ausführen der Vielzahl von verschiedenen Nahrungsmittelverarbeitungsprogrammen;
einem Zwischenraum (2), der die einzelne Verarbeitungskammer (1) relativ isoliert, und der selektiv heizbar und mit einer Kühlflüssigkeit kühlbar ist;
einem austauschbaren ersten Werkzeug (5), das mit einem Hauptmotor (7) gekoppelt werden kann;
einem Vakuumsystem; und
einem Einlassventil (19) für eine Verarbeitungsflüssigkeit, wobei das Einlassventil mit der Verarbeitungskammer (1) verbunden ist, um eine Verarbeitungsflüssigkeit direkt in das Nahrungsmittelprodukt einzuleiten.

2. Nahrungsmittelzubereitungsvorrichtung nach Anspruch 1, die ferner eine Einlassöffnung (17) für eine Kühlflüssigkeit aufweist, wobei die Einlassöffnung (17) für eine Kühlflüssigkeit mit dem Zwischenraum (2) verbunden ist.

3. Nahrungsmittelzubereitungsvorrichtung nach Anspruch 1 oder 2, die ferner eine Einlassöffnung (18) für eine Heizflüssigkeit aufweist, wobei die Einlassöffnung (18) für eine Heizflüssigkeit mit dem Zwischenraum (2) verbunden ist.

4. Nahrungsmittelzubereitungsvorrichtung nach einem der Ansprüche 1 bis 3, **dadurch gekennzeichnet, dass** der Zwischenraum (2) die Verarbeitungskammer (1) umgibt.

5. Nahrungsmittelzubereitungsvorrichtung nach einem der Ansprüche 1 bis 4, die ferner eine Spalte (3) zwischen der Verarbeitungskammer (1) und dem Zwischenraum (2) aufweist.

6. Nahrungszubereitungsvorrichtung nach einem der Ansprüche 1 bis 5, die ferner einen kuppelförmigen halbkugeligen Deckel aufweist.

7. Nahrungsmittelzubereitungsvorrichtung nach einem der Ansprüche 1 bis 6, die ferner ein zweites Werkzeug (6) aufweist, das mit einem Antriebsmotor (13) gekoppelt werden kann.

8. Nahrungsmittelzubereitungsvorrichtung nach einem der Ansprüche 1 bis 7, die ferner einen Beschicker (10) zum Einleiten von Zutaten in die Verarbeitungskammer 81) aufweist.

9. Nahrungsmittelzubereitungsvorrichtung nach einem der Ansprüche 1 bis 8, die ferner eine Sonde (20) zum Messen der Temperatur eines zu verarbeitenden Produktes aufweist.

10. Nahrungsmittelzubereitungsvorrichtung nach einem der Ansprüche 1 bis 9, die ferner eine automatische Kondensationsabgleitung (21) in dem Zwischenraum (2) aufweist.

11. Nahrungsmittelzubereitungsvorrichtung nach einem der Ansprüche 1 bis 10, die ferner einen Kanal (16) zum Abwärtsströmen von Kühlflüssigkeit, die in dem Zwischenraum (2) fließt, aufweist.

12. Nahrungsmittelzubereitungsvorrichtung nach einem der Ansprüche 1 bis 11, die ferner eine Verbindung (23) zum Abwärtsströmen von Kondensationswasser und von Fließwasser aufweist.

13. Nahrungsmittelzubereitungsvorrichtung nach Anspruch 6, **dadurch gekennzeichnet, dass** der Deckel (4) mit einem Gelenk (24) zum Öffnen und Schließen des Deckels (4) verbunden ist; dass der Deckel (4) mit einem Gummidichtring (22) versehen ist, um internen Druck und Vakuum aufrecht zu erhalten; und dass der Deckel (4) einen Bügel (15) zum Verschließen des Deckels (4) hat.

14. Nahrungsmittelzubereitungsvorrichtung nach einem der Ansprüche 1 bis 13, die ferner ein Leuchtmittel (11) und ein Überwachungsfenster (12), das vorzugsweise einen Scheibenwischer hat, zum Betrachten und Kontrollieren des verarbeiteten Produkts aufweist.

15. Nahrungsmittelzubereitungsvorrichtung nach Anspruch 7, **dadurch gekennzeichnet, dass** das zweite Werkzeug (6) ein Kratzspatel (6) ist.

16. Nahrungsmittelzubereitungsvorrichtung nach einem der Ansprüche 1 bis 15, **dadurch gekennzeichnet, dass** die einzelne Verarbeitungskammer einen flachen Boden hat, auf den das austauschbare erste Werkzeug (5) gesetzt wird.

17. Nahrungsmittelzubereitungsvorrichtung nach Anspruch 16, **dadurch gekennzeichnet, dass** die einzelne Verarbeitungskammer (1) eine zylindrische Seitenwand hat, wobei das austauschbare erste Werkzeug (5) einen Zusatz hat, der angrenzend an den flachen Boden der einzelnen Verarbeitungskammer (1) und mit einer Spitze nahe der zylindrischen Seitenwand der einzelnen Verarbeitungskammer (1) verläuft.

## Revendications

1. Equipement de préparation alimentaire pour exécuter une variété de différents programmes de traitement alimentaire, comprenant :
une chambre de traitement (1) unique pour exécuter ladite variété de différents programmes de traitement alimentaire ;
un espace (2) isolant relativement la chambre de traitement (1) unique et étant sélectivement chauffable et refroidissable par un fluide de refroidissement ;
un premier outil (5) interchangeable qui peut être couplé à un moteur principal (7);
un système de vide ; et
une soupape d'entrée (19) pour un fluide de traitement, connectée à la chambre de traitement (1) pour introduire un fluide de traitement directement dans le produit alimentaire.

2. Equipement de préparation alimentaire selon la revendication 1, comprenant en outre une entrée (17) pour un fluide de refroidissement, l'entrée (17) pour un fluide de refroidissement étant connectée à l'espace (2).

3. Equipement de préparation alimentaire selon la revendication 1 ou la revendication 2, comprenant en outre une entrée (18) pour un fluide de chauffage, l'entrée (18) pour un fluide de chauffage étant connectée à l'espace (2).

4. Equipement de préparation alimentaire selon l'une des revendications 1 à 3, dans lequel l'espace (2) entoure la chambre de traitement (1).

5. Equipement de préparation alimentaire selon l'une des revendications 1 à 4, comprenant en outre un interstice (3) entre la chambre de traitement (1) et l'espace (2).

6. Equipement de préparation alimentaire selon l'une des revendications 1 à 5, comprenant en outre un couvercle hémisphérique en forme de dôme.

7. Equipement de préparation alimentaire selon l'une des revendications 1 à 6, comprenant en outre un second outil (6) qui peut être couplé à un moteur à engrenages (13).

8. Equipement de préparation alimentaire selon l'une des revendications 1 à 7, comprenant en outre une alimentation (10) pour introduire des ingrédients dans la chambre de traitement (1).

9. Equipement de préparation alimentaire selon l'une des revendications 1 à 8, comprenant en outre une sonde (20) pour mesurer la température d'un produit à traiter.

10. Equipement de préparation alimentaire selon l'une des revendications 1 à 9, comprenant en outre un déchargeur de condensation automatique (21) dans l'espace (2).

11. Equipement de préparation alimentaire selon l'une des revendications 1 à 10, comprenant en outre un canal (16) pour la circulation descendante de fluide de refroidissement circulant dans l'espace (2).

12. Equipement de préparation alimentaire selon l'une des revendications 1 à 11, comprenant en outre une connexion (23) pour la circulation descendante d'eau de condensation et d'eau de circulation.

13. Equipement de préparation alimentaire selon la revendication 6, dans lequel le couvercle (4) est couplé à une charnière (24) pour ouvrir et fermer le couvercle (4) ; est pourvu d'une bague d'étanchéité (22) en caoutchouc pour assurer le maintien de la pression interne et du vide ; et a un serre-joint (15) pour verrouiller le couvercle (4).

14. Equipement de préparation alimentaire selon l'une des revendications 1 à 13, comprenant en outre un dispositif lumineux (11) et une fenêtre d'observation (12), qui a de préférence un essuie-glace, pour inspecter et vérifier le produit traité.

15. Equipement de préparation alimentaire selon la revendication 7, dans lequel le second outil (6) est une spatule raclante (6).

16. Equipement de préparation alimentaire selon l'une des revendications 1 à 15, dans lequel la chambre de traitement unique a un fond plat sur lequel le premier outil (5) interchangeable est placé.

17. Equipement de préparation alimentaire selon la revendication 16, dans lequel la chambre de traitement (1) unique a un mur latéral cylindrique, le premier outil (5) interchangeable ayant un appendice s'étendant adjacent au fond plat de la chambre de traitement (1) unique et avec une extrémité proche du mur latéral cylindrique de celle-ci.
